# EUROPÄISCHE PATENTSCHRIFT

(11) **EP 3 132 972 B1**
(45) Veröffentlichungstag und Bekanntmachung des Hinweises auf die Patenterteilung: **01.01.2025**
(21) Anmeldenummer: 15181725.1
(22) Anmeldetag: 20.08.2015
(51) Int. Cl.: B60Q 1/24, B60Q 1/26

(54) **VERKLEIDUNGSBAUTEIL FÜR EIN FAHRZEUG**
CLADDING COMPONENT FOR A VEHICLE
COMPOSANT D'HABILLAGE POUR VÉHICULE

(43) Veröffentlichungstag der Anmeldung: 22.02.2017
(73) Patentinhaber: SMP Deutschland GmbH, 79268 Bötzingen (DE)
(72) Erfinder: Fischer, Eric, 79106 Freiburg (DE)
(74) Vertreter: Westphal, Mussgnug & Partner Patentanwälte mbB

(56) Entgegenhaltungen:
- EP-A1- 2 028 046
- DE-A1- 10 055 561
- DE-A1- 102008 056 985
- DE-T2- 69 735 125
- DE-T5- 112013 005 176
- DE-U1- 202004 008 681
- TW-U- M 493 492
- US-A1- 2002 030 997
- US-A1- 2002 054 488
- US-A1- 2003 169 384
- US-A1- 2004 130 883
- US-A1- 2009 003 002
- US-B1- 9 162 614

## Beschreibung

Die vorliegende Erfindung betrifft ein Verkleidungsbauteil für ein Fahrzeug. Weiterhin betrifft die Erfindung eine Beleuchtungseinrichtung für das Verkleidungsbauteil und ein Fahrzeug mit einem derartigen Verkleidungsbauteil.

Verkleidungsbauteile von Fahrzeugen sind insbesondere Seitenschweller und Stoßfänger, welche neben der Verkleidung des Fahrzeugs auch zum Schutz der Fahrzeugkarosserie bei Aufprällen und bei Steinschlägen sowie insbesondere bei Geländewagen und SUVs auch als Trittbrett dienen.

Moderne Automobile weisen neben der üblichen Beleuchtung wie Fern- und Rücklicht, Blinker und Bremslicht häufig auch eine Um- oder Vorfeldbeleuchtung auf, die beispielsweise in den Seitenspiegeln und/oder den Türen und/oder den Türöffnern angeordnet ist und mit denen das unmittelbare Umfeld des Fahrzeugs beleuchtet werden kann, wenn das Fahrzeug abgestellt ist und die Benutzer ein- oder aussteigen wollen. Aus Sicherheitsgründen dürfen Vorfeldbeleuchtungen nur dann aktiviert werden, wenn das Fahrzeug steht. Sobald das Fahrzeug bewegt wird, muss die Vorfeldbeleuchtung ausgeschaltet werden. Den Benutzern des Fahrzeugs wird bei Dunkelheit das Öffnen der Tür vereinfacht, da der Türgriff deutlich sichtbar ist. Zudem sind Hindernisse auf dem Boden in unmittelbarer Umgebung der Tür durch die Vorfeldbeleuchtung sichtbar, beispielsweise Steine oder Pfützen.

Ein Nachteil derartiger in den Seitenspiegeln und/oder in den Türöffnern oder den Türen angebrachten Vorfeldbeleuchtungen ist, dass das ausgeleuchtete Vorfeld abhängig von der Stellung der Tür ist. Wenn also die Tür geöffnet wird und der Benutzer in das Fahrzeug einsteigen will, ist der Boden zwischen der geöffneten Tür und der übrigen Karosserie nicht beleuchtet, was dazu führen kann, dass der Benutzer beim Einsteigen nach dem Öffnen der Tür zuvor beleuchtete Hindernisse nicht mehr wahrnimmt und beispielsweise doch in eine Pfütze tritt. Um einem derartigen Nachteil zu begegnen, schlägt die US 8 235 568 B2 vor, eine Anzahl von LEDs am Seitenschweller zu montieren, um unabhängig von der Stellung der Tür das unmittelbare Umfeld des Fahrzeugs auszuleuchten. Nachteilig an dieser Anordnung ist jedoch, dass die LEDs das Umfeld des Fahrzeugs nur punktuell ausleuchten. Da die LEDs zumindest teilweise über die Seitenverkleidung nach außen vor ragen, besteht zudem die Gefahr, dass sie durch Steinschlag oder andere Einwirkungen beschädigt oder gar zerstört werden. Zudem entsteht durch die über die Seitenverkleidung vorragenden LEDs ein optisch nachteiliger Anblick.

Die US 9 162 614 B1, die DE 11 2013 005 176 T5, die DE 10 2008 056 985 A1 und die DE 100 55 561 A1 zeigen verschiedene Beleuchtungsvorrichtungen für Kraftfahrzeuge, mit welchen das Umfeld des Fahrzeugs beleuchtet werden kann. Die US 2002/0030997 A1 zeigt eine Beleuchtungsvorrichtung für Schiffe, die aber auch für Kraftfahrzeuge einsetzbar ist. Allen ist gemein, dass eine gleichmäßige Ausleuchtung des Umfelds des Fahrzeugs unabhängig von der Stellung der Tür des Fahrzeugs nicht oder nur mit sehr hohem Aufwand zu realisieren ist.

Die DE 20 2004 008 681 U1 und die EP 2 028 046 A1 zeigen beleuchtete Dekorelemente von Fahrzeugen, die insbesondere an der Einstiegsleiste eines Fahrzeugs installiert werden können.

Die US 2004/0130883 A1, die US 2003/0169384 A1, die US 2002/0054488 A1 und die DE 697 35 125 T2 zeigen Beleuchtungsvorrichtungen, die für LCDs eingesetzt werden. Die US 2009/0003002 A1 zeigt eine ebene Beleuchtungsvorrichtung. Aufgabe der vorliegenden Erfindung ist es daher, ein Verkleidungsbauteil anzugeben, mit welchem das Umfeld eines Fahrzeugs unabhängig von der Stellung der Tür gleichmäßig ausgeleuchtet werden kann, wobei die Gefahr einer Beschädigung oder Zerstörung im Betrieb des Fahrzeuges weitgehend vermindert werden soll.

Gelöst wird die Aufgabe durch die in den Ansprüchen 1 und 5 angegebenen Merkmale. Vorteilhafte Ausbildungen sind Gegenstand der Unteransprüche.

Gemäß einer Ausführungsform der vorliegenden Erfindung umfasst das Verkleidungsbauteil für ein Fahrzeug eine Wandung, welche einen Innenraum des Verkleidungsbauteils begrenzt, eine oder mehrere Durchgangsöffnungen, welche die Wandung durchdringen, und eine im Innenraum des Verkleidungsbauteils angeordnete Beleuchtungseinrichtung, welche mit einer Lichtquelle verbindbar ist und einen oder mehrere Lichtleiter aufweist, welche derart in Bezug auf die Durchgangsöffnungen angeordnet sind, dass vom Lichtleiter ausgestrahltes Licht die Durchgangsöffnungen durchlaufen kann.

Dabei weisen die Durchgangsöffnungen eine Erstreckung auf, die im Wesentlichen parallel zu einer Längsachse des Lichtleiters verläuft, wobei die Erstreckung mit zunehmendem Abstand der Durchgangsöffnungen von der Lichtquelle zunimmt.

Alternativ oder kumulativ sind jeweils zwei benachbarte Durchgangsöffnungen um eine Distanz zueinander beabstandet angeordnet, die parallel zum Lichtleiter verläuft, wobei die Distanz mit zunehmendem Abstand der Durchgangsöffnungen von der Lichtquelle abnimmt.

Neben den Lichtleitern kann die Beleuchtungseinrichtung weiterhin Kopplungselemente umfassen, mit denen das Licht von der Lichtquelle in den die Lichtleiter eingekoppelt werden kann. Zudem kann die Beleuchtungseinrichtung Halterungen umfassen, mit denen der Lichtleiter im Verkleidungsbauteil befestigt werden kann. Die Lichtleiter können beispielsweise aus PMMA (Polymethylmethacrylat) oder PC (Polycarbonat) bestehen oder diese Materialien umfassen. Bei Verwendung dieser Materialien sind die Lichtleiter starr, können aber auch flexibel sein, beispielsweise durch Verwendung von PU (Polyurethan) oder Glasfasern. Die Lichtleiter leiten das Licht von der Lichtquelle, die entfernt von der Beleuchtungseinrichtung angeordnet sein kann und damit nicht zur Beleuchtungseinrichtung im Sinne der vorliegenden Erfindung zählen muss, zu dem Punkt, an welchem das Licht benötigt wird. Im Gegensatz zu der in der US 8 235 568 B2 aufgezeigten Lösung ist es erfindungsgemäß möglich, die Lichtquelle so anzuordnen, dass sie von äußeren Einflüssen weitgehend geschützt ist. Hierdurch wird die Zuverlässigkeit der Lichtquelle und folglich der Vorfeldbeleuchtung verbessert.

Die Verwendung von Lichtleitern ermöglicht es, die Durchgangsöffnungen flexibel im Verkleidungsbauteil anzuordnen und ihre Abmessungen flexibel zu wählen. Hierdurch ist es möglich, eine sehr gleichmäßige Ausleuchtung des Umfelds des Fahrzeugs zu realisieren, so dass die Gefahr, dass der Benutzer nicht oder nur unzureichend ausgeleuchtete Gegenstände im unmittelbaren Umfeld des Fahrzeugs übersieht, deutlich reduziert wird. Dadurch, dass die Lichtleiter im Innenraum des Verkleidungsbauteils angeordnet sind, sind sie vor äußeren Einflüssen geschützt. Selbst für den Fall, dass beispielsweise ein Stein die Durchgangsöffnung durchqueren sollte, wird allenfalls die Oberfläche des Lichtleiters beschädigt, was aber im Regelfall eine punktuell etwas ungleichmäßige Ausleuchtung zur Folge hat, die Funktionsfähigkeit der Vorfeldbeleuchtung aber nicht beeinträchtigt.

Weiterhin weist der Lichtleiter insbesondere im Bereich der Durchgangsöffnungen Auskopplungsabschnitte aufweisen, in denen das Licht aus dem Lichtleiter austreten kann. Die Auskopplungsabschnitte können beliebig innerhalb des Lichtleiters angeordnet werden, so dass nur dort Licht ausgekoppelt wird, wo sich auch die Durchgangsöffnungen befinden. Die Lichtleiter sind üblicherweise rohr- oder schlauchförmig ausgebildet, wobei das Licht von dem einen Ende des Lichtleiters, welches mit der Lichtquelle verbunden ist, zum freien Ende geleitet, wo es aus dem Lichtleiter austritt. Folglich muss zu jeder Durchgangsöffnung ein Lichtleiter gelegt werden, was einen relativ hohen Montageaufwand zur Folge hat. Die Auskopplungsabschnitte ermöglichen es jedoch, Licht in radialer Richtung aus den Lichtleitern auszukoppeln. Somit ist es möglich, nur einen Lichtleiter zu verwenden und ihn entlang der Durchgangsöffnungen zu führen, was aus fertigungstechnischer Sicht besonders einfach ist. Dadurch, dass nur dort Licht radial aus dem Lichtleiter ausgekoppelt wird, wo sich eine Durchgangsöffnung befindet, wird der Verlust der Beleuchtungsstärke mit zunehmendem Abstand von der Lichtquelle auf ein Minimum reduziert. Auch hierdurch ist es möglich, die Ausleuchtung der unmittelbaren Umgebung des Fahrzeugs so gleichmäßig wie möglich zu gestalten.

Gemäß einer Weiterbildung der Erfindung weisen die Auskopplungsabschnitte eine Anzahl von Kerben oder Ausbeulungen auf, wobei die Anzahl der Kerben oder Ausbeulungen pro Auskopplungsabschnitt mit zunehmendem Abstand der Auskopplungsabschnitte von der Lichtquelle zunimmt. Die Kerben oder die Ausbeulungen, die auf der Oberfläche des Lichtleiters ausgebildet sind und vorzugsweise in etwa senkrecht zur Längsachse des Lichtleiters verlaufen, bewirken Beugungs- und Brechungseffekte, welche zu einer radialen Auskopplung des Lichts über den Abschnitt der Oberfläche, der den Kerben gegenüberliegt, aus dem Lichtleiter führen. Je mehr Kerben ein Auskopplungsabschnitt aufweist, desto mehr Licht wird radial aus dem Lichtleiter ausgekoppelt. Mit jeder Einheit von Licht, die aus dem Lichtleiter ausgekoppelt wird, sinkt die Beleuchtungsstärke, die der Lichtleiter noch bereitstellen kann. Folglich nimmt die von einer Durchgangsöffnung bereitgestellte Beleuchtungsstärke bei einer gleich bleibenden Anzahl von Kerben mit zunehmendem Abstand von der Lichtquelle ab. Wird jedoch die Anzahl der Kerben pro Auskopplungsabschnitt erhöht, so kann die Abnahme der Beleuchtungsstärke ausgeglichen oder zumindest reduziert werden. Die pro Durchgangsöffnung bereitgestellte Beleuchtungsstärke bleibt damit gleich oder nahezu gleich, wodurch das Umfeld des Fahrzeugs sehr gleichmäßig beleuchtet werden kann.

Erfindungsgemäß weisen die Durchgangsöffnungen eine Erstreckung auf, die im Wesentlichen parallel zu einer Längsachse des Lichtleiters verläuft, wobei die Erstreckung mit zunehmendem Abstand der Durchgangsöffnungen von der Lichtquelle zunimmt. In dieser Ausgestaltung kann die Anzahl der Kerben über die gesamte Länge des Lichtleiters gleich bleiben. Die oben beschriebene Verringerung der Beleuchtungsstärke, die von einer gegebenen Durchgangsöffnung bereitgestellt wird, wird in diesem Fall durch eine größere Erstreckung der Durchgangsöffnung entlang der Längsachse des Lichtleiters ausgeglichen. Mit zunehmender Erstreckung weisen die Durchgangsöffnungen dann eine höhere Anzahl an Kerben auf, so dass die pro Durchgangsöffnung abgegebene Beleuchtungsstärke konstant oder nahezu konstant gehalten wird. Hierdurch kann das Umfeld des Fahrzeugs sehr gleichmäßig beleuchtet werden.

Bei jeweils zwei benachbarten Durchgangsöffnungen, welche um eine Distanz zueinander beabstandet angeordnet sind, die parallel zum Lichtleiter verläuft, ist erfindungsgemäß vorgesehen, dass die Distanz mit zunehmendem Abstand der Durchgangsöffnungen von der Lichtquelle abnimmt. Auch durch diese Maßnahme kann die oben beschriebene Abnahme der Beleuchtungsstärke mit zunehmendem Abstand von der Lichtquelle ausgeglichen werden. Wiederum resultiert eine gleichmäßigere Ausleuchtung der unmittelbaren Umgebung des Fahrzeugs.

Darüber hinaus kann die Lichtquelle im Verkleidungsbauteil angeordnet sein. Wie oben bereits erwähnt, ermöglicht es die Verwendung von Lichtleitern, die Lichtquelle beabstandet von dem Ort anzuordnen, wo das Licht benötigt wird. Folglich ist es möglich, die Lichtquelle innerhalb des Verkleidungsbauteils dort anzuordnen, wo es vor äußeren Einflüssen geschützt ist. Zwar wäre es auch möglich, die Lichtquelle an einem geschützten Ort innerhalb des Fahrzeugs und außerhalb des Verkleidungsbauteils anzuordnen, jedoch werden durch die Anordnung der Lichtquelle im Verkleidungsbauteil zum einen die Länge der benötigten Lichtleiter und damit das Gewicht sowie die Materialkosten reduziert, zum anderen wird auch die Montage des Verkleidungsbauteils am Fahrzeug vereinfacht. Es muss nur die Lichtquelle mit einer entsprechend ausgestalteten Energieversorgung des Fahrzeugs verbunden werden, während der oder die Lichtleiter nicht mit einer im Fahrzeug angeordneten Lichtquelle verbunden werden müssen.

In einer Fortbildung der Erfindung umfasst die Lichtquelle eine oder insbesondere zwei LED-Platinen. Dabei soll die LED-Platine mindestens eine LED umfassen und die Infrastruktur bereitstellen, damit die LED Licht abgeben kann. LEDs zeichnen sich durch eine hohe Lichtausbeute bei einer geringen Wärmeentwicklung aus. Folglich wandeln sie die elektrische Energie deutlich effizienter in Lichtenergie um. Zudem lassen sie sich kompakter bauen, so dass der benötigte Bauraum im Vergleich zu einer Lichtquelle, welche eine Anzahl von Glühbirnen aufweist, deutlich reduziert werden kann. Gegenüber einer Glühbirne weisen LED-Platinen eine erhöhte Lebensdauer auf. Bei der Verwendung von zwei LED-Platinen kann Licht von beiden Enden des Lichtleiters eingekoppelt werden, wodurch die Beleuchtungsstärke erhöht und insgesamt eine gleichmäßigere Beleuchtung des Umfelds des Fahrzeugs erreicht wird.

Es bietet sich an, wenn die Durchgangsöffnungen mittels einer transparenten Schicht verschlossen sind. Die transparente Schicht kann aus PMMA (Polymethylmethacrylat), PC (Polycarbonat) oder Glas bestehen oder diese Komponenten umfassen. Alternativ kann die transparente Schicht aus einem anderen hierfür geeigneten lichtdurchlässigen Material bestehen. Hierdurch wird verhindert, dass Staub, Steine und andere Partikel sowie Feuchtigkeit in das Verkleidungsbauteil eindringen können, wodurch weiterhin vermieden wird, dass die Lichtquelle und/oder der Lichtleiter verschmutzt und/oder beschädigt werden.

Ferner können die Durchgangsöffnungen und/oder die Beleuchtungseinrichtung und/oder die Lichtquelle auf einem separaten Wandungsabschnitt angeordnet sein, der mit der Wandung verbindbar ist. Hieraus resultieren montagetechnische Vorteile, da diese Komponenten bereits vormontiert werden können und anschließend nur noch mit dem übrigen Verkleidungsbauteil verbunden werden müssen, beispielsweise durch eine Klebe- oder Clips-Verbindung. In vielen Fällen weisen die Verkleidungsbauteile eine sehr verwinkelte und gewölbte Struktur auf, wodurch die Montage der Lichtleiter und/oder der Lichtquelle sowie die Fertigung der Durchgangsöffnungen erschwert werden. Durch das Vorsehen eines separaten Wandungsabschnitts kann der verfügbare Arbeitsraum bei der Befestigung des oder der Lichtleiter und/oder der Lichtquelle vergrößert und die Komplexität der Montage verringert werden, was insbesondere dann der Fall ist, wenn der separate Wandungsabschnitt eben oder weitgehend eben ist. Die Durchgangsöffnungen lassen sich besonders einfach mit ebenen Wandungsabschnitten fertigen, beispielsweise durch Stanzen, Spritzen, Fräsen oder Lasern. Darüber hinaus ist es möglich, den separaten Wandungsabschnitt bei einem Zulieferer zu fertigen und im fertigmontierten Zustand an das Band zu liefern. Selbstverständlich kann der separate Wandungsabschnitt auch schon beim Zulieferer selbst mit dem Verkleidungsbauteil verbunden werden und als Einheit an das Band geliefert werden.

Ein weiterer Aspekt der Erfindung betrifft eine Beleuchtungseinrichtung für ein Verkleidungsbauteil nach einem der zuvor beschriebenen Ausführungsformen, die mit einer Lichtquelle verbindbar ist und einen oder mehrere Lichtleiter aufweist, welche derart in Bezug auf die Durchgangsöffnungen angeordnet sind, dass vom Lichtleiter ausgestrahltes Licht die Durchgangsöffnungen durchlaufen kann. Die technischen Effekte und Vorteile, die mit dieser Beleuchtungseinrichtung erzielt werden können, entsprechen denjenigen, die für die entsprechenden Ausführungsbeispiele der Verkleidungsbauteile diskutiert worden sind. Zusammenfassend soll an dieser Stelle erwähnt werden, dass es mit den erfindungsgemäßen Verkleidungsbauteile möglich ist, das Umfeld eines Fahrzeugs unabhängig von der Stellung der Tür oder der Türen gleichmäßig auszuleuchten, wobei die Wahrscheinlichkeit, dass es zu Zerstörungen oder Beschädigungen der Vorfeldbeleuchtung im Betrieb des Fahrzeugs kommt, stark reduziert ist.

Zudem betrifft die Erfindung ein Fahrzeug, welches ein Verkleidungsbauteil und/oder eine Beleuchtungseinrichtung nach einem der zuvor vorgestellten Ausführungsbeispiele umfasst. Die technischen Effekte und Vorteile, die mit diesem Fahrzeug erzielt werden können, entsprechen denjenigen, die für die entsprechenden Ausführungsbeispiele der Verkleidungsbauteile diskutiert worden sind. Zusammenfassend soll an dieser Stelle erwähnt werden, dass es mit den erfindungsgemäßen Verkleidungsbauteil möglich ist, das Umfeld eines Fahrzeugs unabhängig von der Stellung der Tür oder der Türen gleichmäßig auszuleuchten, wobei die Wahrscheinlichkeit, dass es zu Zerstörungen oder Beschädigungen der Vorfeldbeleuchtung im Betrieb des Fahrzeugs kommt, stark reduziert ist.

Das Verkleidungsbauteil kann so am Fahrzeug montiert sein, dass das die Durchgangsöffnungen durchdringende Licht beim bestimmungsgemäßen Gebrauch des Fahrzeugs zum Boden hin abstrahlt. Aufgrund von länderspezifischen Sicherheitsbestimmungen ist es in einigen Ländern nicht erlaubt, weißes Licht seitlich von einem Fahrzeug abzustrahlen. Häufig darf nur orangenes Licht seitlich abgestrahlt werden. Orangenes Licht weist aber den Nachteil auf, dass es die von ihm beleuchteten Abschnitte nicht besonders gut sichtbar ausleuchtet. Dadurch, dass es erfindungsgemäß möglich ist, das die Durchgangsöffnungen durchdringende Licht nur zum Boden hin abstrahlen zu lassen, kann weißes Licht verwendet werden, wodurch das Umfeld des Fahrzeugs besonders gut sichtbar ausgeleuchtet wird. Zudem sind die Durchgangsöffnungen für den Benutzer im Normalfall nicht sichtbar, was aus ästhetischer Sicht vorteilhaft ist. Da die Benutzer im Normalfall nicht direkt auf die Durchgangsöffnungen schauen, werden sie auch nicht vom austretenden Licht geblendet.

Es bietet sich an, wenn das Verkleidungsbauteil eine Seitenverkleidung, ein Trittbrett oder ein Stoßfänger des Fahrzeugs ist. Derartige Verkleidungsbauteile ändern ihre Position relativ zum Fahrzeug im Gegensatz zu Türen nicht. Insofern wird das Umfeld des Fahrzeugs unabhängig von der Stellung der Türen oder Heckklappen ausgeleuchtet. Hierdurch wird die Gefahr verringert, dass der Benutzer des Fahrzeugs trotz anfänglicher Beleuchtung des Umfelds des Fahrzeugs nach Öffnen der Tür doch mit einem Gegenstand in Berührung kommt und sich dadurch verschmutzt oder verletzt.

Die Erfindung wird im Folgenden anhand von Ausführungsbeispielen unter Bezugnahme auf die anhängenden Zeichnungen im Detail erläutert. Es zeigen
- Figur 1a: eine Draufsicht auf eine erste Ausführungsform eines erfindungsgemäßen Verkleidungsbauteils,
- Figur 1b: eine Schnittdarstellung durch das in Figur 1a dargestellte Verkleidungsbauteil entlang der in Figur 1a definierten Schnittebene,
- Figur 2a: eine Schnittdarstellung durch ein Verkleidungsbauteil gemäß einem zweiten Ausführungsbeispiel,
- Figur 2b: eine Schnittdarstellung durch einen Verkleidungsbauteil gemäß einem dritten Ausführungsbeispiel,
- Figur 3: eine Draufsicht auf ein Verkleidungsbauteil gemäß einem vierten Ausführungsbeispiel,
- Figur 4: eine Draufsicht auf einen Verkleidungsbauteil gemäß einem Beispiel,
- Figur 5a: eine isolierte Darstellung eines separaten Wandungsabschnitts gemäß einem ersten Ausführungsbeispiel, und
- Figur 5b: eine isolierte Darstellung des separaten Wandungsabschnitts gemäß einem zweiten Ausführungsbeispiel,
- Figur 6: eine perspektivische Darstellung eines erfindungsgemäßen Verkleidungsbauteils.

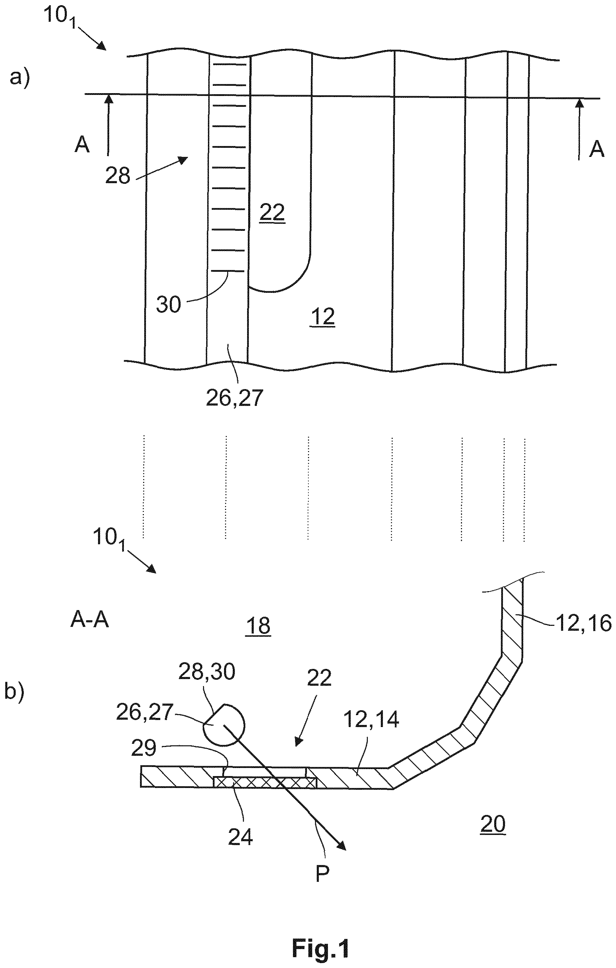

In Figur 1a und ist ein erstes Ausführungsbeispiel eines erfindungsgemäßen Verkleidungsbauteils 10₁ anhand einer Draufsicht und in Figur 1b anhand einer Schnittdarstellung entlang der in Figur 1a definierten Schnittebene A-A dargestellt. Das Verkleidungsbauteil 10₁ umfasst eine Wandung 12, die in Bezug auf die in Figur 1b gewählte Ansicht einen im Wesentlichen horizontal verlaufenden Abschnitt 14 aufweist, der allmählich in einen im Wesentlichen vertikal verlaufenden Abschnitt 16 übergeht. Die Wandung 12 trennt einen Innenraum 18 des Verkleidungsbauteils 10₁ von einem Außenbereich 20. Im horizontal verlaufenden Abschnitt 14 weist das Verkleidungsbauteil 10₁ eine Durchgangsöffnung 22 auf, welche die Wandung 12 komplett durchdringt und die Form eines Langlochs hat. Die Durchgangsöffnung 22 ist mit einer transparenten Schicht 24 verschlossen.

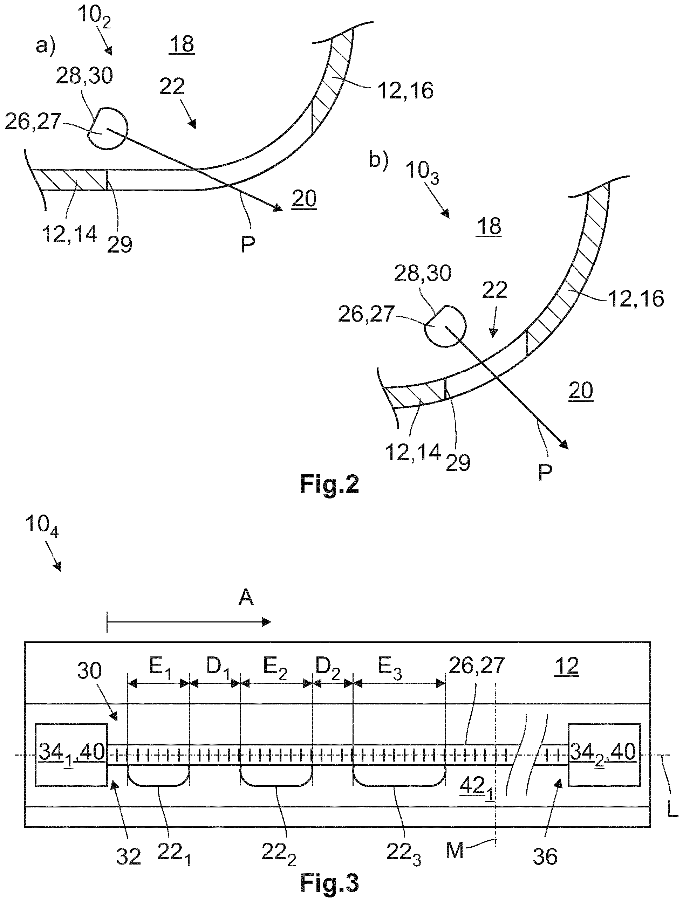

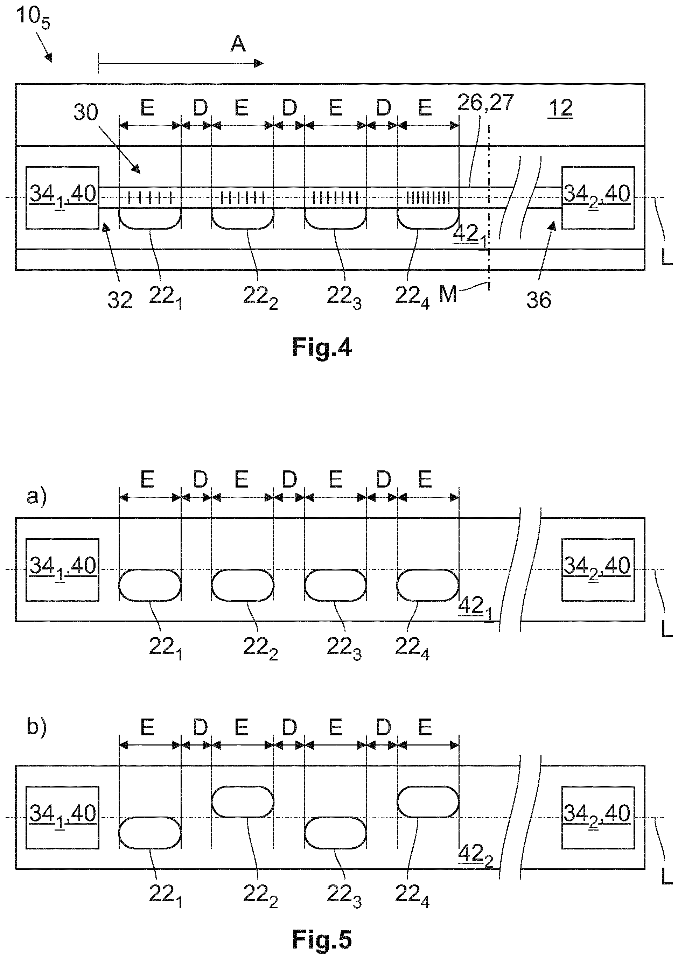

Weiterhin umfasst das Verkleidungsbauteil 10₁ eine Beleuchtungseinrichtung 26, welche einen im Wesentlichen rohrförmigen Lichtleiter 27 aufweist, der im dargestellten Beispiel starr ausgeführt ist. Die Beleuchtungseinrichtung 26 umfasst nicht dargestellte Befestigungsmittel, mit denen der Lichtleiter 27 am Verkleidungsbauteil 10₁ derart befestigt ist, dass er etwas oberhalb einer inneren seitlichen Kante 29 der Durchgangsöffnung 22 verläuft. Im Bereich der Durchgangsöffnungen 22 weist der Lichtleiter 27 einen Auskopplungsabschnitt 28 auf, der durch eine Anzahl von Kerben 30 realisiert ist, die sich auf einer Oberfläche des Lichtleiters 27 befinden. Nicht dargestellt ist der Fall, dass der Auskopplungsabschnitt 28 eine Anzahl von Ausbeulungen aufweist, die aber gleichwirkend mit den Kerben 30 sind. Im Auskopplungsabschnitt 28 ist es möglich, Licht, welches von einer hier nicht dargestellten Lichtquelle (vgl. Figuren 3 und 4) in den Lichtleiter 27 eingekoppelt wird, radial aus dem Lichtleiter 27 austreten zu lassen. Die Anordnung und die Ausrichtung der Kerben 30 bestimmen, über welche Fläche und in welchem Winkel das Licht radial aus dem Lichtleiter 27 austritt. Die Hauptaustrittsrichtung des Lichts aus dem Lichtleiter 27 ist mit dem Pfeil P gekennzeichnet. Man erkennt, dass das Licht über den Abschnitt der Oberfläche aus dem Lichtleiter 27 austritt, der den Kerben 30 gegenüber liegt.

In Figur 2a ist ein zweites Ausführungsbeispiel des erfindungsgemäßen Verkleidungsbauteils 10₂ anhand einer Schnittdarstellung gezeigt. Im Vergleich zum ersten Ausführungsbeispiel, welches in den Figuren 1a und 1b dargestellt ist, erstreckt sich die Durchgangsöffnung 22 nicht nur über den im Wesentlichen horizontal verlaufenden Abschnitt 14, sondern zumindest teilweise auch über den Übergang zwischen dem im Wesentlichen horizontal und dem im Wesentlichen vertikal verlaufenden Abschnitt 16. Da die Durchgangsöffnung 22 im Vergleich zu dem ersten Ausführungsbeispiel durch die Erstreckung auf den Übergang etwas breiter ist, kann das Licht seitlicher vom Verkleidungsbauteil 10₂ abstrahlen, wodurch eine größere und weiter vom Fahrzeug entfernte Fläche im Umfeld des Fahrzeugs beleuchtet werden kann. Entsprechend ist der Lichtleiter 27 in einer anderen Drehstellung im Vergleich zum ersten Ausführungsbeispiel 10₁ angeordnet. Die Hauptaustrittsrichtung des Lichts aus dem Lichtleiter 27 ist mit dem Pfeil P gekennzeichnet.

In Figur 2b ist ein drittes Ausführungsbeispiel des erfindungsgemäßen Verkleidungsbauteils 10₃ anhand einer Schnittdarstellung gezeigt. In diesem Ausführungsbeispiel erstreckt sich die Durchgangsöffnung 22 nur im Übergang zwischen dem im Wesentlichen horizontal und dem im Wesentlichen vertikal verlaufenden Abschnitt 14, 16. Die Drehstellung des Lichtleiters 27 ist entsprechend angepasst, um eine optimale Abstrahlung des Lichts zu ermöglichen. Die Hauptaustrittsrichtung des Lichts aus dem Lichtleiter 27 ist mit dem Pfeil P gekennzeichnet.

An dieser Stelle soll angemerkt werden, dass es nicht zwingend erforderlich ist, dass die Verkleidungsbauteile einen im Wesentlichen horizontalen und/oder im Wesentlichen vertikal verlaufenden Abschnitt 14, 16 aufweisen. Vielmehr sollen die Ausführungsbeispiele, die in den Figuren 1 und 2 gezeigt sind, zum Ausdruck bringen, dass die Durchgangsöffnungen 22 nicht nur in einem ebenen, sondern auch in einem gewölbten Wandungsabschnitt angeordnet sein können. Wie bereits erwähnt, gelten in vielen Ländern Sicherheitsbestimmungen, wonach weißes Licht nicht seitlich von einem Fahrzeug abgestrahlt werden darf. Da aber weißes Licht die beste Ausleuchtung des Umfelds des Fahrzeugs ermöglicht, muss die seitliche Abstrahlung des weißen Lichts vermieden werden. Die in den Figuren 2a und 2b gezeigten Ausführungsbeispiele 10₂ und 10₃ erfüllen diese Sicherheitsbestimmungen.

In Figur 3 ist ein viertes Ausführungsbeispiel des erfindungsgemäßen Verkleidungsbauteils 10₄ anhand einer Draufsicht dargestellt. Das Verkleidungsbauteil 10₄ umfasst eine erste Durchgangsöffnung 22₁, eine zweite Durchgangsöffnung 22₂ und eine dritte Durchgangsöffnung 22₃. An einem ersten Ende 32 und an einem zweiten Ende 36 des starren Lichtleiters 27 ist jeweils eine erste Lichtquelle 34₁ und eine zweite Lichtquelle 34₂ angeordnet. Im dargestellten Beispiel sind die beiden Lichtquellen 34₁ und 34₂ mit den beiden Enden 32, 36 des starren Lichtleiters verbunden, was aber nicht zwangsläufig der Fall sein muss. Es muss nur gewährleistet sein, dass Licht in den starren Lichtleiter 27 eingekoppelt werden kann. Im dargestellten Beispiel sind die beiden Lichtquellen 34₁, 34₂ als jeweils eine LED-Platine 40 mit mindestens einer LED ausgestaltet. Wie bereits für die anderen Ausführungsbeispiele dargelegt, verläuft der Lichtleiter 27 der Beleuchtungseinrichtung 26 etwas oberhalb der inneren Kante 29 der Durchgangsöffnungen 22, die aufgrund der gewählten Darstellungsart in Figur 3 verdeckt ist. Die LED-Platinen 40 können eine Aufnahme oder ein Gehäuse aufweisen, mit welcher oder welchem der Lichtleiter 27 so in Bezug auf die Lichtquelle 34 positioniert werden kann, dass das erzeugte Licht optimal in den Lichtleiter 27 eingekoppelt werden kann. Zudem kann die LED-Platine 40 so auf dem Verkleidungsbauteil 10₄ angeordnet sein, dass der Lichtleiter 27 im gewünschten Abstand zu den Durchgangsöffnungen 22 verläuft.

Die gestrichelte Linie M soll dabei die Mitte des Lichtleiters 27 in Bezug auf eine Längsachse L des Lichtleiters 27 darstellen. Aus Gründen der Übersichtlichkeit ist nur eine erste Hälfte des Lichtleiters 27 vollständig dargestellt, wobei die zweite Hälfte spiegelbildlich zur ersten Hälfte ausgeführt sein soll, was aber nicht zwingend der Fall sein muss.

Der Lichtleiter 27 weist über seine gesamte Länge eine Anzahl der Kerben 30 auf, die eine gleichbleibende Entfernung zueinander aufweisen. Die Kerben 30 können somit unabhängig von der Lage und Größe der Durchgangsöffnungen 22 angebracht werden, was ihre Fertigung erleichtert. Die erste Durchgangsöffnung 22₁ hat dabei den geringsten Abstand A zur ersten Lichtquelle 34₁, während die dritte Durchgangsöffnung 22₃ den größten Abstand A zur ersten Lichtquelle 34₁ aufweist. Die erste Durchgangsöffnung 22₁ weist eine erste Erstreckung E₁, die zweite Durchgangsöffnung 22₂ eine zweite Erstreckung E₂ und die dritte Durchgangsöffnung 22₃ eine dritte Erstreckung E₃ auf, die jeweils entlang der Längsachse L des Lichtleiters 27 verlaufen. Die erste Erstreckung E₁ ist dabei kleiner als die zweite Erstreckung E₂, die wiederum kleiner ist als die dritte Erstreckung E₃. Folglich nimmt das Maß der Erstreckung E der Durchgangsöffnungen 22 mit zunehmendem Abstand A der Durchgangsöffnungen 22 zur ersten Lichtquelle 34₁ zu.

Weiterhin weist die erste Durchgangsöffnung 22₁ eine erste Distanz D₁ zur zweiten Durchgangsöffnung 22₂ und die zweite Durchgangsöffnung 22₂ eine zweite Distanz D₂ zur dritten Durchgangsöffnung 22 auf. Die erste Distanz D₁ ist dabei größer als die zweite Distanz D₂. Sowohl die Änderungen der Erstreckung E als auch der Distanzen D dienen dazu, die Abnahme der Beleuchtungsstärke, die sich mit zunehmendem Abstand A zur ersten Lichtquelle 34₁ verstärkt, auszugleichen, um somit eine möglichst gleichmäßige Ausleuchtung des Umfelds des Fahrzeugs zu erreichen. In Abweichung vom dargestellten Lichtleiter 27 ist es möglich, die Kerben 30 nur im Bereich der Durchgangsöffnungen 22 anzuordnen und nicht im Bereich zwischen den Durchgangsöffnungen 22.

In Figur 4 ist ein Beispiel des Verkleidungsbauteils 10₅ anhand einer Draufsicht dargestellt. Der Aufbau des Verkleidungsbauteils 10₅ gleicht dabei zu weiten Teilen demjenigen des vierten Ausführungsbeispiels 10₄. Wiederum ist aus Gründen der Übersichtlichkeit nur die erste Hälfte des Lichtleiters 27 vollständig gezeigt, wobei die zweite Hälfte des Lichtleiters 27 spiegelbildlich zur ersten Hälfte aufgebaut sein soll. Die gestrichelte Linie M markiert dabei die Mitte des Lichtleiters 27 in Bezug auf die Längsachse L. Im Gegensatz zum vierten Ausführungsbeispiel weist das Verkleidungsbauteil 10₅ vier Durchgangsöffnungen 22₁ bis 22₄ auf, die jeweils dieselbe Erstreckung E entlang der Längsachse des Lichtleiters 27 aufweisen. Weiterhin ist auch die Distanz D zwischen den vier Durchgangsöffnungen 22 immer gleich.

Ebenfalls im Gegensatz zum vierten Ausführungsbeispiel weist der Lichtleiter 27 nur im Bereich der Durchgangsöffnungen 22 die Kerben 30 auf. Um jedoch den mit zunehmendem Abstand A von der ersten Lichtquelle 34 ansteigenden Verlust der Beleuchtungsstärke auszugleichen, nimmt die Anzahl von Kerben 30 pro Durchgangsöffnung 22 mit zunehmenden Abstand A der Durchgangsöffnung 22 vom Lichtleiter 27 zu. Entsprechend ist die Entfernung zwischen zwei Kerben 30 umso geringer, je weiter die betreffende Durchgangsöffnung 22 von der ersten Lichtquelle 34 beabstandet ist.

Sowohl im vierten als auch in diesem Beispiel sind die erste und die zweite Lichtquelle 34, 38, die Durchgangsöffnungen und der Lichtleiter 27 auf einem separaten Wandungsabschnitt 42₁ gemäß einem ersten Ausführungsbeispiel angeordnet, der auf nicht näher gezeigte Weise mit der übrigen Wandung 12 des Verkleidungsbauteils 10₄ und 10₅ verbunden ist.

In den Figuren 5a ist das erste Ausführungsbeispiel und in Figur 5b ein zweites Ausführungsbeispiel des separate Wandungsabschnitts 42₁, 42₂ und die auf ihm angeordneten Lichtquellen 34₁ und 34₂ ohne den Lichtleiter 27 dargestellt, so dass die Lage der Durchgangsöffnungen 221 bis 22₄ gut erkennbar ist. Während im ersten Ausführungsbeispiel des separaten Wandungsabschnitts 42₁ die Durchgangsöffnungen 22₁ bis 22₄ fluchtend entlang der Längsachse L angeordnet sind, sind sie im zweiten Ausführungsbeispiel 42₂ seitlich versetzt zueinander angeordnet. Die versetzte Anordnung der Durchgangsöffnungen 22₁ bis 22₄ gemäß dem zweiten Ausführungsbeispiels des separaten Wandungsabschnitts 42₂ ermöglicht es, ein breiteres Umfeld des Fahrzeugs zu beleuchten.

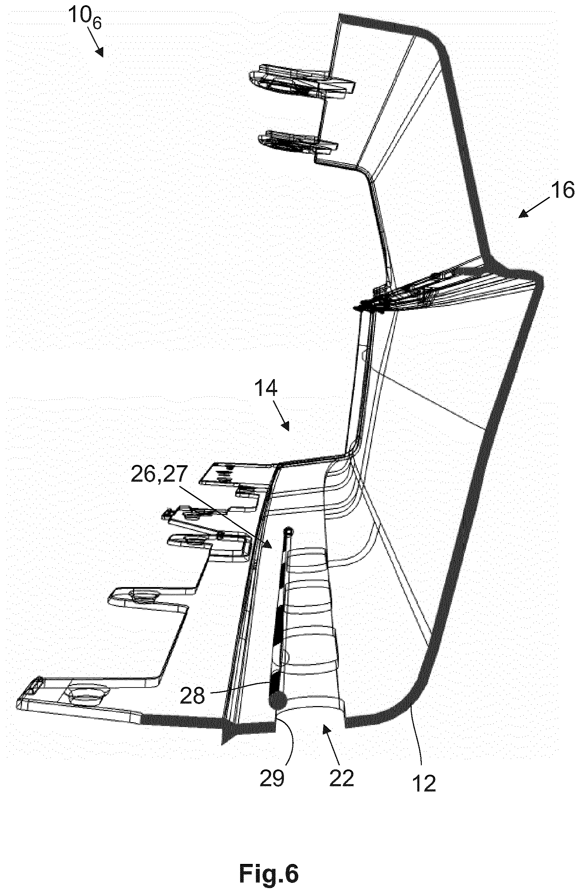

In Figur 6 ist ein sechstes Ausführungsbeispiel des erfindungsgemäßen Verkleidungsbauteils 10₆ anhand einer perspektivischen Darstellung gezeigt. Man erkennt, dass sich die Durchgangsöffnungen 22 innerhalb des im Wesentlichen horizontal verlaufenden Abschnitts 14 des Verkleidungsbauteils 10₆ befinden und der Lichtleiter 27 entlang der inneren Kante 29 der Durchgangsöffnungen 22 angeordnet ist.

Die Abmessungen des Verkleidungsbauteils 10 muss nicht verändert werden, um es mit der Lichtquelle 34 und der Beleuchtungseinrichtung 26 zu versehen. Der zusätzliche konstruktive Aufwand bleibt daher sehr gering. Das von der Lichtquelle 34 und der Beleuchtungseinrichtung 26 hervorgerufene Mehrgewicht beträgt ca. 300 g, was im vertretbaren Rahmen liegt. Die ausgeleuchtete Fläche beträgt ca. 1200 bis 1400 mm in Längsrichtung des Fahrzeugs und ca. 400 bis 600 mm in Querrichtung des Fahrzeugs.

In allen Fällen kann die Erstreckung E der Durchgangsöffnungen 22 Werte von 10 bis 300 mm und die Distanz D Werte zwischen 5 und 25 mm aufweisen (vgl. Figuren 3 und 4). Die Breite der Durchgangsöffnungen 22 kann Werte zwischen 5 und 25 mm annehmen. Die Beleuchtungsstärke beträgt ca. zwischen 4 und 50 lx (Lux) auf dem Boden. Die Leistungsaufnahme der verwendeten LED-Platinen 40 beträgt vorzugsweise 16 W (Watt). Der Lichtleiter 27 kann beispielsweise eine Länge von 650 bis 900 mm und einen Durchmesser von 4 bis 5,5 mm aufweisen.

### Bezugszeichenliste

- 10, 10₁ - 10₅: Verkleidungsbauteil
- 12: Wandung
- 14: horizontal verlaufender Abschnitt
- 16: vertikal verlaufender Abschnitt
- 18: Innenraum
- 20: Außenbereich
- 22, 22₁ - 22₄: Durchgangsöffnung
- 24: transparente Schicht
- 26: Beleuchtungseinrichtung
- 27: Lichtleiter
- 28: Auskopplungsabschnitt
- 29: Kante
- 30: Kerben, Ausbeulungen
- 32: erstes Ende
- 34, 34₁, 34₂: Lichtquelle
- 36: zweites Ende
- 40: LED-Platine
- 42, 42₁, 42₂: separater Wandungsabschnitt

- A: Abstand
- D, D₁, D₂: Distanz
- E, E₁ - E₃: Erstreckung
- L: Längsachse
- M: Mitte
- P: Pfeil

## Patentansprüche

1. Verkleidungsbauteil für ein Fahrzeug, umfassend
- eine Wandung (12), welche einen Innenraum (18) des Verkleidungsbauteils (10) begrenzt,
- mehrere Durchgangsöffnungen (22), welche die Wandung (12) durchdringen, und
- eine im Innenraum (18) des Verkleidungsbauteils (10) angeordnete Beleuchtungseinrichtung (26), welche mit einer Lichtquelle (34) verbunden ist und einen Lichtleiter (27) aufweist, welcher derart in Bezug auf die Durchgangsöffnungen (22) angeordnet ist, dass vom Lichtleiter (27) ausgestrahltes Licht die Durchgangsöffnungen (22) durchlaufen kann,
**dadurch gekennzeichnet, dass**
- der Lichtleiter (27) im Bereich der Durchgangsöffnungen (22) Auskopplungsabschnitte (28) aufweist, in denen das Licht aus dem Lichtleiter (26) austreten kann, wobei
o die Durchgangsöffnungen (22) eine Erstreckung (E) aufweisen, die parallel zu einer Längsachse (L) des Lichtleiters (27) verläuft, wobei die Erstreckung (E) mit zunehmendem Abstand (A) der Durchgangsöffnungen (22) von der Lichtquelle (34) zunimmt, und/oder
o jeweils zwei benachbarte Durchgangsöffnungen (22) um eine Distanz (D) zueinander beabstandet angeordnet sind, die parallel zum Lichtleiter (27) verläuft, wobei die Distanz (D) mit zunehmendem Abstand (A) der Durchgangsöffnungen (22) von der Lichtquelle (34) abnimmt.

2. Verkleidungsbauteil nach Anspruch 1,
**dadurch gekennzeichnet, dass** die Lichtquelle (34) im Verkleidungsbauteil (10) angeordnet ist.

3. Verkleidungsbauteil nach Anspruch 2,
**dadurch gekennzeichnet, dass** die Lichtquelle (34) eine oder zwei LED-Platinen (40) umfasst.

4. Verkleidungsbauteil nach einem der vorherigen Ansprüche,
**dadurch gekennzeichnet, dass** die Durchgangsöffnungen (22) mittels einer transparenten Schicht (24) verschlossen sind.

5. Fahrzeug, umfassend ein Verkleidungsbauteil (10) nach einem der Ansprüche 1 bis 4,
**dadurch gekennzeichnet, dass** das Verkleidungsbauteil (10) so am Fahrzeug montiert ist, dass das die Durchgangsöffnungen (22) durchdringende Licht beim bestimmungsgemäßen Gebrauch des Fahrzeugs zum Boden hin abstrahlt.

6. Fahrzeug nach Anspruch 5,
**dadurch gekennzeichnet, dass** das Verkleidungsbauteil (10) eine Seitenverkleidung, ein Trittbrett oder ein Stoßfänger des Fahrzeugs ist.

## Claims

1. Trim component for a motor vehicle, comprising
- a wall (12) which delimits an inner space (18) of the trim component (10),
- a plurality of through holes (22) which penetrate the wall (12), and
- a lighting device (26), arranged in the inner space (18) of the trim component (10), which is connect to a light source (34) and which comprises a light conductor (27), which is arranged in relation to the through holes (22) such that the light emitted by the light conductor (27) can flow through the through holes (22),
**characterized in that**
- the light conductor (27) comprises, in the region of the through holes (22), decoupling sections (28), in which the light from the light conductor (26) can emerge, wherein
o the through holes (22) comprise an extension (E) which runs parallel to a longitudinal axis (L) of the light conductor (27), wherein the extension (E) increases as the distance (A) of the through holes (22) from the light source (34) increases,
and/or
o each pair of adjacent through hole (22) are arranged spaced at a distance (D) to each other which extends parallel to the light conductor (27), wherein the distance (D) decreases as the distance (A) of the through holes (22) from the light source (34) increases.

2. Trim component in accordance with claim 1,
**characterized in that** the light source (34) is arranged in the trim component (10).

3. Trim component in accordance with claim 2,
**characterized in that** the light source (34) includes one or more LED circuit boards (40).

4. Trim component in accordance with any of the preceding claims,
**characterized in that** the through holes (22) are closed by means of a transparent layer (24).

5. Motor vehicle which comprises a trim component (10) in accordance with any of claims 1 to 4,
**characterized in that** the trim component (10) is mounted on the motor vehicle suche that the light passing through the through holes (22) radiates toward the ground when the motor vehicle is used as intended.

6. Motor vehicle in accordance with claim 5,
**characterized in that** the trim component (10) is a side panel, a running board or a bumper of the motor vehicle.

## Revendications

1. Pièce d'habillage de véhicule comprenant :
- une paroi (12) délimitant un volume intérieur (18) de la pièce d'habillage (10),
- plusieurs orifices traversants (22) qui traversent la paroi (12), et
- une installation d'éclairage (26) dans le volume intérieur (18) de la pièce d'habillage (10), qui est relié à la source lumineuse (34) et comporte un guide de lumière (27) installé par rapport aux orifices traversants (22) pour que la lumière issue du guide de lumière (27) puisse traverser les orifices traversants (22),
pièce d'habillage **caractérisée en ce que**
- le guide de lumière (27) présente des segments de découplage (28) dans la région des orifices traversants (22), segments à travers lesquels la lumière peut sortir du guide de lumière (26),
* les orifices traversants (22) ayant une extension (E) parallèle à l'axe longitudinal (L) du guide de lumière (27), l'extension (E) allant en croissant avec la distance croissante (A) entre les orifices traversants (22) et la source de lumière (34), et/ou
* chaque fois deux orifices traversants voisins (22) sont écartés l'un de l'autre d'une distance (D) qui est parallèle au guide de lumière (27), la distance (D) diminuant avec l'augmentation de la distance (A) des orifices traversants (22) par rapport à la source de lumière (34).

2. Pièce d'habillage selon la revendication 1,
**caractérisée en ce que**
la source lumineuse (34) est installée dans la pièce d'habillage (10).

3. Pièce d'habillage selon la revendication 2,
**caractérisée en ce que**
la source de lumière (34) comprend une ou deux platines de LED (40).

4. Pièce d'habillage selon l'une des revendications précédentes,
**caractérisée en ce que**
les orifices traversants (22) sont fermés avec une couche transparente (24).

5. Véhicule comprenant une pièce d'habillage (10) selon l'une des revendications 1 à 4,
**caractérisé en ce que**
la pièce d'habillage (10) est installée sur le véhicule de façon que la lumière passant dans les orifices traversants (22) soit rayonnée vers le sol pour l'utilisation appropriée du véhicule.

6. Véhicule selon la revendication 5,
**caractérisé en ce que**
la pièce d'habillage (10) est un habillage latéral, un marchepied ou un parechoc du véhicule.
